# EUROPÄISCHE PATENTSCHRIFT

(11) **EP 3 083 838 B1**
(45) Veröffentlichungstag und Bekanntmachung des Hinweises auf die Patenterteilung: **01.05.2019**
(21) Anmeldenummer: 14828446.6
(22) Anmeldetag: 11.12.2014
(51) Int. Cl.: C09C 1/36, C09C 3/06, C09C 3/04

(54) **VERFAHREN ZUR OBERFLÄCHENBESCHICHTUNG VON ANORGANISCHEN PARTIKELN, INSBESONDERE TITANDIOXID-PIGMENTPARTIKELN**
METHOD FOR COATING THE SURFACE OF INORGANIC PARTICLES, IN PARTICULAR TITANIUM DIOXIDE PARTICLES
PROCÉDÉ DE REVÊTEMENT DE SURFACE DE PARTICULES INORGANIQUES, NOTAMMENT DE PARTICULES D'OXIDE DE TITANE

(30) Priorität: 17.12.2013 EP 13005849
(43) Veröffentlichungstag der Anmeldung: 26.10.2016
(73) Patentinhaber: Kronos International, Inc., 51373 Leverkusen (DE)
(72) Erfinder: HOMMES, Corinna, 50670 Köln (DE); FRIEDRICH, Jörg, 42799 Leichlingen (DE); FRAHM, Heiko, 51375 Leverkusen (DE); WILKENHÖNER, Uwe, 42113 Wuppertal (DE)
(86) Internationale Anmeldenummer: PCT/EP2014/003323
(87) Internationale Veröffentlichungsnummer: WO 2015/090541

(56) Entgegenhaltungen:
- WO-A1-2009/146834
- DE-A1-102006 059 849
- US-A- 5 993 533

## Beschreibung

### Gebiet der Erfindung

Die Erfindung betrifft ein Verfahren zur Oberflächenbeschichtung von anorganischen Festkörperpartikeln in einer wässrigen Suspension. Insbesondere betrifft sie die Beschichtung von Titandioxid-Pigmentpartikeln mit Siliciumdioxid und Aluminiumoxid.

### Technologischer Hintergrund der Erfindung

Feinteilige anorganische Festkörperpartikel werden vielfach oberflächenbeschichtet, um bestimmte Eigenschaften zu verändern wie beispielsweise Abriebfestigkeit, Oberflächenladung, Dispergiereigenschaften, Säure- oder Lichtbeständigkeit. Beispielsweise beschreibt die US 2,885,366 das Aufbringen eines dichten Siliciumdioxid-Überzugs auf Substratteilchen wie Nickel- oder Eisenpulver, Glasfasern oder Titandioxid. Farb- und Weißpigmente werden regelmäßig mit verschiedenen Oxiden und Hydroxiden beschichtet (z.B. EP 0 130 272 A1, US Re.27818).

Die Oberflächenbehandlung (Nachbehandlung) insbesondere von TiO₂-Pigmenten findet üblicherweise in der wässrigen Phase statt, wobei Metalloxide, -hydroxide, -phosphate oder ähnliche Verbindungen auf der Partikeloberfläche abgeschieden werden. Das Verfahren wird üblicherweise als Batchprozess in einem Rührbehälter geführt, wie beispielsweise in GB 1 340 045 offenbart. Ausgehend von einer wässrigen Pigmentpartikelsuspension werden entsprechende Metallsalze in gelöster Form als sogenannte Vorläuferverbindungen zugegeben. Der pH-Wert der Suspension wird dann mit alkalischen oder sauren Substanzen so eingestellt, dass die Vorläuferverbindungen als Oxide, Hydroxide etc. ausfallen. Beispielsweise offenbart die GB 1 340 045 ein Batchverfahren zur Oberflächenbeschichtung von Titandioxidpigment, wobei das Pigment in einer Suspension für bis zu zwei Stunden einer intensiven Rührung in einem Rührgefäß unterworfen wird, währenddessen die Beschichtungssubstanzen zugegeben und gefällt werden. WO 2009/146834 beschreibt ebenfalls ein Batchverfahren zur Oberflächenbeschichtung von TiO₂-Pigmenten, wobei das Pigment mit den Vorläuferverbindungen mittels eines Dispergierapparats homogenisiert wird, bevor es in ein separates Gefäß gefördert und dort das Pigment beschichtet wird.

Bei der Zugabe der Vorläuferverbindungen kommt es jedoch aufgrund des vergleichsweise großen Volumens des Rührbehälters und der begrenzten Rührmöglichkeiten zu lokalen Konzentrations-, pH-, Viskositäts- und Temperaturgradienten, welche das Ergebnis der Beschichtung von Titandioxidpartikeln beeinträchtigen. Die resultierende Beschichtung ist ungleichmäßig dicht bzw. ungleichmäßig dick.
Desweiteren kommt es leicht zu Partikelagglomeration in der Suspension, so dass die abgeschiedenen Beschichtungssubstanzen nicht das einzelne Partikel sondern häufig ein Agglomerat umhüllen. Die Agglomerate werden in der abschließenden Trockenmahlung wieder aufgebrochen, so dass im Endprodukt nicht alle Partikel mit einer geschlossenen Hülle versehen sind, sondern die Partikel auch unbeschichtete Oberflächenanteile aufweisen. Außerdem wird ein Teil der Beschichtungssubstanzen nicht auf der Partikeloberfläche fixiert, sondern bildet Flocken neben den Partikeln. Diese Flocken können aus der Suspension nicht mehr entfernt werden und wirken sich nachteilig auf die optischen Eigenschaften der Pigmente aus, beispielsweise auf Aufhellvermögen bzw. Färbekraft (tinting strength TS).
Ein Vorteil des üblichen Batchprozesses in einem Rührbehälter ist die auf die Reaktionskinetik angepasste Verweilzeit. Ein Nachteil ist dagegen, dass Temperaturprofile während des Beschichtungsprozesses mit vernünftigem Aufwand nicht realisierbar sind.

Eine Verbesserung des bekannten Batchprozesses zur Beschichtung von Titandioxid in einem Rührbehälter ist die Verwendung einer Rührkesselkaskade. Hier werden die Vorläuferverbindungen der anorganischen Oxide jeweils in einem separaten kleineren Rührbehälter mit verbesserten Rührmöglichkeiten zugegeben.
Die US 6,695,906 B2 beschreibt ein solches Verfahren, bei dem TiO₂-Pigment mit SiO₂ und Al₂O₃ beschichtet wird. Die Zugabe der löslichen SiO₂-Komponente erfolgt in drei Schritten in drei aufeinanderfolgenden Behandlungsgefäßen, in denen jeweils ein anderer pH-Wert auftritt. Die Zugabe der SiO₂-Komponente erfolgt hierbei entweder direkt in das Behandlungsgefäß oder inline in die Förderleitung.
Doch auch hier treten lokale Konzentrations-, pH-, Viskositäts- und Temperaturgradienten auf, welche zu einer ungleichmäßig dichten bzw. ungleichmäßig dicken Beschichtung der Titandioxidpartikel führen. Auch der Nachteil, dass Temperaturprofile schwer zu realisieren sind, bleibt bestehen.

Eine zweite Verbesserung des bekannten Batchprozesses zur Beschichtung von Titandioxid in einem Rührbehälter ist ein vollkontinuierlicher Prozess in einem Rohrreaktor. Hier werden die Vorläuferverbindungen der anorganischen Oxide jeweils in einen Rohrreaktor mit idealen Rührmöglichkeiten (Inline-Mischer oder Inline-Dispergierapparat) gegeben. Die Zugabe der Vorläuferverbindungen erfolgt quasi auf molekularer Ebene, d.h. die zur Reaktion zu bringenden Vorläuferverbindungen und die zu beschichtenden Titandioxidpartikel werden auf engstem Raum zusammengebracht und ideal durchmischt. Dadurch werden lokale Konzentrations-, pH-, Viskositäts- und Temperaturgradienten vermieden.
Ein solches Verfahren ist z.B. in der US 5,993,533 offenbart, wo Titandioxidpigment in zwei aufeinander folgenden Reifestufen mit SiO₂ und Al₂O₃ beschichtet wird. Die Vorläuferverbindung wird in einem Inlinemischer zu der TiO2-Slurry gegeben. Die Slurry wird anschließend in einen Behälter gefördert und die Beschichtungssubstanz wird bei 80 bis 100 °C und bei pH-Werten von >9,5 bzw. <8,5 gefällt.
Die US 2009/0297852 A1 beschreibt ebenfalls einen kontinuierlichen Prozess zur Beschichtung von anorganischen Partikeln, wobei die Vorläuferverbindungen direkt vor einem oder in einem Inline-Dispergierapparat der Slurry zugegeben und die Slurry homogenisiert wird. Anschließend wird die Slurry in einen Behälter gefördert und die Beschichtungssubstanz wird gefällt.
DE10 2006 059 849 A1 offenbart ein Beschichtungsverfahren, wobei die Vorläufersubstanz der Slurry direkt vor oder in einer Rührwerksmühle zugegeben wird und die Fällung der Beschichtungssubstanz anschließend in einem Behälter stattfindet.
Der vollkontinuierliche Prozess erlaubt die Realisierung von Temperaturprofilen. Von Nachteil ist allerdings, dass eine auf die Reaktionskinetik angepasste Verweilzeit nur entweder durch ein gegebenenfalls sehr langes Rohr unter Vermeidung der Ausbildung eines laminaren Strömungsprofils oder durch einen entsprechend großen Verweilzeitbehälter realisiert werden kann. Ein weiterer Nachteil des vollkontinuierlichen Prozesses ist, dass bei nicht idealer Prozessführung eine Durchmischung der einzelnen anorganischen Oxide mit den nachfolgend aufgebrachten Beschichtungsmaterialien nicht ausgeschlossen werden kann und deswegen Mischoxidschichten anstelle von separaten Oxidschichten entstehen.

### Aufgabenstellung und Kurzbeschreibung der Erfindung

Der Erfindung liegt die Aufgabe zugrunde, ein Verfahren zur Beschichtung von anorganischen Partikeln bereitzustellen, welches die Nachteile der bekannten Verfahren überwindet, beispielsweise, dass sowohl die Homogenisierung der Suspension sichergestellt ist, als auch eine Agglomeratbildung weitgehend unterbunden wird.

Die Aufgabe wird gelöst durch ein Verfahren zur Beschichtung von anorganischen Partikeln in einer wässrigen Suspension mit mindestens einer Beschichtungssubstanz dadurch gekennzeichnet, dass die wässrige Suspension im Kreislauf gefördert wird und in dem Kreislauf ein Gefäß vorhanden ist, wobei das Gefäß mit einem Hochleistungsrührwerk, das eine Umfangsgeschwindigkeit von mindestens 15 m/s oder eine spezifische Rührwerksleistung P/V von mindestens 30 W/m³ aufweist, ausgerüstet ist und wobei in dem Kreislauf weiterhin ein auf dem Rotor-Stator-Prinzip basierender Durchflussmischer installiert ist und wobei in den Durchflussmischer eine wasserlösliche Vorläuferverbindung der mindestens einen Beschichtungssubstanz dosiert wird.

Weitere vorteilhafte Ausführungen der Erfindung sind in den Unteransprüchen beschrieben.

### Figuren

- Figur 1:: Flussdiagramm des erfindungsgemäßen Verfahrens
- Figur 2:: Transmissionselektronenmikroskopaufnahme des Pigments gemäß Beispiel 1
- Figur 3:: Transmissionselektronenmikroskopaufnahme des Pigments gemäß Beispiel 3
- Figur 4:: Transmissionselektronenmikroskopaufnahme des Pigments gemäß Vergleichsbeispiel 3

### Beschreibung der Erfindung

Alle im folgenden offenbarten Angaben bezüglich Größe, Zeit, Temperatur, Komponentenmenge, Konzentration in Gew.-%, pH-Wert, etc. sind so zu verstehen, dass alle Werte, die im Bereich der dem Fachmann bekannten jeweiligen Messgenauigkeit liegen, mit umfasst sind. Wenn nicht anders angegeben, wurden in den Beispielen technische Qualitäten der verschiedenen Substanzen verwendet. Der Ausdruck "im wesentlichen frei von" bedeutet, dass der spezielle Stoff bei Verwendung der standardmäßigen kommerziellen Tests und Methoden, die zum frühesten Prioritätszeitpunkt dieser Anmeldung in der Industrie verwendet wurden, nicht nachgewiesen wurde (d.h. er ist unterhalb der Nachweisgrenze).

Das erfindungsgemäße Verfahren geht aus von einer wässrigen Suspension unbehandelter anorganischer Festkörperpartikel, die im Folgenden auch als Grundkörper bezeichnet werden. Geeignet sind feinteilige anorganische Festkörper mit einer Partikelgröße im Bereich von etwa 0,001 µm bis 1 mm bevorzugt 0,1 bis 1 µm, die in wässrigen Suspensionen verarbeitet werden, wie z.B. Pigmente (Titandioxid, Farbpigmente, Effektpigmente etc.), Füllstoffe, Titanate, Eisen-, Nickel- oder andere metallische Partikel.
Als Beschichtung kommen Oxide, Hydroxide, Phosphate und ähnliche Verbindungen der bekannten Elemente Si, Ti, AI, Zr, Sn, Mn, Ce und weiterer Elemente in Frage. Hier und im Folgenden soll unter "Oxid" auch das jeweilige Hydroxid oder wasserhaltige Oxid verstanden werden. Insbesondere handelt es sich um anorganische Beschichtungen.

In einer besonderen Ausführung der Erfindung kommen unbehandelte Titandioxidpigmentpartikel (TiO₂-Grundkörper) zum Einsatz. Es kann sowohl nach dem Sulfatverfahren wie nach dem Chloridverfahren hergestellter TiO₂-Grundkörper eingesetzt werden. Der TiO₂-Grundkörper kann Anatas- oder Rutilstruktur haben. Bevorzugt ist Rutil. Üblicherweise ist der TiO₂-Grundkörper zur Verbesserung der Photostabilität des TiO₂-Pigments mit bekannten Elementen wie z.B. AI dotiert. Beispielsweise wird im Chloridverfahren eine solche Menge AlCl₃ zusammen mit TiCl₄ oxidiert, dass der TiO₂-Grundkörper etwa 0,5 bis 2,0 Gew.-% AI gerechnet als Al₂O₃ aufweist. Bei der Titandioxidherstellung nach dem Sulfatverfahren wird das hydrolysierte Titanylsulfat mit Glühzusätzen wie beispielsweise Kaliumhydroxid oder Phosphorsäure versetzt und anschließend calciniert. Der TiO₂-Grundkörper aus dem Sulfatverfahren enthält üblicherweise etwa 0,2 bis 0,3 Gew.-% K sowie 0,05 bis 0,4 Gew.-% P gerechnet jeweils als Oxid.

Die unbehandelten Partikel, insbesondere TiO₂-Grundkörper werden zu einer wässrigen Suspension angeteigt. Üblicherweise wird der Suspension ein Dispergiermittel zugesetzt. Geeignete Dispergiermittel sind dem Fachmann bekannt. Beispielsweise wird bei der Deagglomeration von TiO₂-Grundkörper in Sandmühlen bevorzugt Natriumsilikat oder Natriumhexametaphosphat als Dispergiermittel eingesetzt. Die Konzentration des Dispergiermittels liegt üblicherweise im Bereich von 0,05 bis 5,0 kg/t TiO₂.

Üblicherweise wird auch der pH-Wert der Suspension in Abhängigkeit von Partikelart und Dispergiermittel eingestellt. Beispielsweise wird bei der Deagglomeration von TiO₂-Grundkörper aus dem Chloridverfahren der pH-Wert auf Werte von etwa 9 bis 12 oder auf Werte von etwa 2 bis 5 eingestellt. Die Temperatur von TiO₂-Grundkörpersuspensionen liegt üblicherweise bei etwa 40 bis 80°C.

Üblicherweise wird die Suspension anschließend deagglomeriert, beispielsweise in Rührwerksmühlen wie Perlmühlen oder Sandmühlen oder in Ultraschallmühlen.

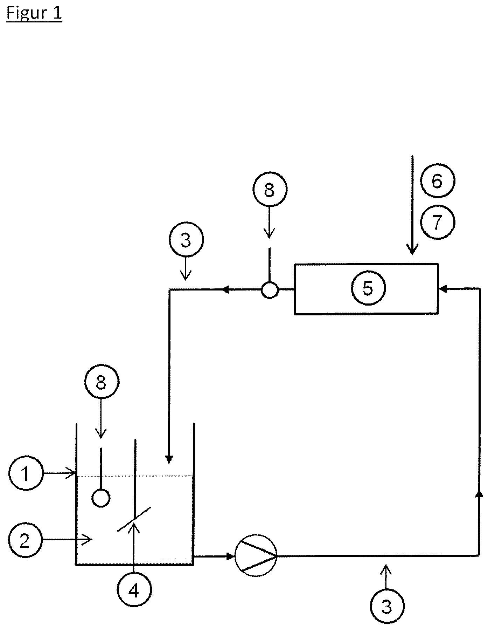

Eine Ausführung des erfindungsgemäßen Verfahrens zur Oberflächenbeschichtung (Nachbehandlung) von anorganischen Partikeln ist schematisch in Figur 1 dargestellt: Die deagglomerierte wässrige Partikelsuspension (2) wird erfindungsgemäß aus einem Vorlagegefäß (Gefäß) (1) in einem Kreislaufprozess (3) gefördert (umgepumpt). In dem Vorlagegefäß befindet sich ein Hochleistungsrührwerk (4). Das Hochleistungsrührwerk weist eine Mindest-Umfangsgeschwindigkeit von 15 m/s oder eine spezifische Rührleistung P/V von mindestens 30 W/m³ auf, wobei P=Rührwerksleistung und V=Volumen des Gefäßes sind. Das Hochleistungsrührwerk basiert beispielsweise auf dem Rotor-Stator-Prinzip und ist vorzugsweise ein Leitstrahlmischer. Ein Leitstrahlmischer ermöglicht ein intensives Mischen im Makro- und im Mikromaßstab. Desweiteren sind Zahnscheibenrührer oder Hochleistungsschrägblattrührer geeignet.
In dem Kreislauf (3) ist weiterhin ein Durchflussmischer (z.B. Inline-Dispergiermischer) (5) installiert, der ebenfalls auf dem Rotor-Stator-Prinzip beruht. Die wasserlöslichen Vorläuferverbindungen der Beschichtungssubstanzen (6) ebenso wie die gegebenenfalls erforderlichen pH-steuernden Substanzen (7) werden in den Durchflussmischer (5) dosiert. Auf diese Weise werden lokale Konzentrations-, pH-, Viskositäts- und Temperaturgradienten in der Suspension minimiert. Desweiteren sind pH-Sonden (8) in den Kreislauf (3) und das Gefäß (1) integriert.

Zur Beschichtung der Partikel mit Siliciumdioxid wird als wasserlösliche Vorläuferverbindung üblicherweise Natronwasserglas oder Kaliumwasserglas eingesetzt. Des Weiteren können erfindungsgemäß auch metallorganische Verbindungen wie beispielsweise Alkoxysilane als Vorläuferverbindungen für die Beschichtung mit SiO₂ eingesetzt werden. Siliciumdioxid kann als poröse Beschichtung oder als dichte Hülle auf die Partikeloberfläche gefällt werden. Erfindungsgemäß können die Partikel mit den üblicherweise eingesetzten Mengen an Siliciumdioxid beschichtet werden, beispielsweise mit etwa 1 bis 20 Gew.-% SiO₂ bei TiO₂-Pigmentpartikeln.

Zur Beschichtung mit Aluminiumoxid werden als Vorläuferverbindung üblicherweise wasserlösliche Aluminiumsalze wie Natriumaluminat, Aluminiumsulfat, Aluminiumchlorid etc. eingesetzt. Dem Fachmann sind solche Verbindungen bekannt, insbesondere aus der umfangreichen Patentliteratur zur Oberflächenbeschichtung (Nachbehandlung) von Titandioxid.
Erfindungsgemäß können die Partikel mit den üblicherweise eingesetzten Mengen an Aluminiumoxid beschichtet werden, beispielsweise mit etwa 0,5 bis 10 Gew.-% Al₂O₃ bei TiO₂-Pigmentpartikeln.

Nachdem die Suspension den Durchflussmischer (z.B. Inline-Dispergierer) passiert hat, wird sie durch das Vorlagegefäß und weiter im Kreis gefördert. Die im Vorlagegefäß durch den Leitstrahlmischer eingebrachten erhöhten Scherkräfte sorgen mit der besseren Durchmischung ebenfalls für eine Minimierung der lokalen Konzentrations-, pH-, Viskositäts- und Temperaturgradienten in der Suspension.

Erfindungsgemäß sind verschiedene Fällungsbedingungen der Beschichtungssubstanz realisierbar. Beispielsweise kann eine kinetisch gesteuerte Fällung von Siliciumdioxid aus Natronwasserglas zur Ausbildung einer dichten Hülle realisiert werden. Hierzu werden die pH-steuernden Substanzen in den Durchflussmischer (z.B. Inline-Dispergierer) dosiert, und die SiO₂-Fällung findet während des kontinuierlichen Scherenergieeintrags im Kreislaufverfahren zeitlich versetzt statt. Eine Agglomeration der TiO₂-Partikel während der zur Fällung erforderlichen pH-Wert-Änderung wird durch den hohen kontinuierlichen Scherenergieeintrag minimiert.
Die Fällung von beispielsweise Al₂O₃ bei einem festen pH-Wert findet dagegen direkt nach Zugabe der pH-steuernden Substanzen und der Durchmischung im Durchflussmischer (z.B. Inline-Dispergierer) statt.

Mit dem erfindungsgemäßen Verfahren ist es darüber hinaus möglich, den Beschichtungsprozess mit einem Temperaturprofil zu führen. Bei dieser Verfahrensweise verfügt beispielsweise das Vorlagegefäß über einen Doppelmantel, über den das Gefäß mit Dampf geheizt oder mit Kühlwasser bzw. über einen Wärmetauscher gekühlt werden kann. Gegebenenfalls kann auch die Temperatur der Förderleitung mit einem Wärmetauscher geregelt werden.

In einer besonderen Ausführung der Erfindung wird die dichte SiO₂-Hülle bei einer Temperatur von etwa 85 bis 95°C bevorzugt bei etwa 90°C und die nachfolgende Al₂O₃-Schicht bei einer Temperatur von etwa 45 bis 55°C bevorzugt bei etwa 50°C auf die Partikel gefällt.

Im Anschluss an die Fällung wird die Suspension auf einen pH-Wert von etwa 5 bis 7 eingestellt, abgepumpt und die beschichteten Partikel nach bekannten Verfahren aus der Suspension abgetrennt, gegebenenfalls gewaschen, getrocknet und feingemahlen. Die Partikel weisen am Ende des Verfahrens vorzugsweise einen pH-Wert von weniger als 6,5 auf.

Das erfindungsgemäße Verfahren unterscheidet von den bekannten Verfahren aus dem Stand der Technik insbesondere dadurch, dass sowohl während der Dosierung der Vorläuferverbindung und der Homogenisierung der Slurry als auch während der Fällung der Beschichtungssubstanz ein hoher Scherenergieeintrag stattfindet, weil die Slurry kontinuierlich im Kreislauf gefördert wird. Dies betrifft in besonderem Maße die Fällung von SiO₂-Schichten, deren Ausbildung - dicht oder porös - stark von der Reaktionskonetik bestimmt ist.

Gegenüber den bekannten Verfahren aus dem Stand der Technik bietet das erfindungsgemäße Verfahren folgende Vorteile:
Aufgrund der erhöhten Scherenergieeinträge, die sich durch das Hochleistungsrührwerk im Vorlagegefäß und den Durchflussmischer auf Rotor-Stator-Basis (z.B. Inline-Dispergierer) im Kreislaufsystem realisieren lassen, ist eine verbesserte Homogenisierung der Suspension möglich. Weiterhin lassen sich hohe Viskositäten, die unter anderen Umständen zur Verdickung der Suspension und entsprechenden Verarbeitungsschwierigkeiten führen, minimieren. Der hohe Scherenergieeintrag kann darüber hinaus zu einer Zerteilung von Partikelagglomeraten führen, die sich im Verlaufe des Nachbehandlungsprozesses auch aufgrund des pH-Verlaufs bilden.
Mit Hilfe der erfindungsgemäßen Kreislauffahrweise lassen sich Temperaturprofile während der Nachbehandlung realisieren, indem beispielsweise die Temperatur in überschaubarer Zeit während der Nachbehandlung abgesenkt wird. Eine feststehende Temperatur während des gesamten Prozesses ist nicht zwingend notwendig.
Weiterhin können zwei verschiedene Fällungszonen realisiert werden. Während eine kinetisch gesteuerte Fällung zeitlich versetzt nach der Dosierung und Mischung stattfindet, kann eine Fällung bei konstantem pH-Wert unmittelbar nach der Dosierung im Dispergierkopf des Durchflussmischers (z.B. Inline-Dispergierer) stattfinden.
Das erfindungsgemäße Verfahren ermöglicht den Aufbau separater, nacheinander gefällter Schichten auf der Partikeloberfläche.
Darüber hinaus kann durch die Verwendung zweier parallel installierter Vorlagegefäße eine Pendelfahrweise realisiert werden, wodurch die Bildung separater Schichten verbessert wird.

In einer alternativen Ausführung der Erfindung werden die Partikel in der Suspension vor ihrer Einleitung in den Kreislauf deagglomeriert, indem die Suspension durch eine Mühle, z.B. eine Rührwerksmühle wie Perlmühle oder Sandmühle oder eine Ultraschallmühle gefördert wird. In dieser Ausführung wird die Suspension direkt vor dem Durchflussmischer in den Kreislauf eingeleitet anstatt über das Vorlagegefäß. Die Suspension wird dann durch den Durchflussmischer gefördert, wo - wie oben beschrieben - die wasserlösliche Vorläuferverbindung einer Beschichtungssubstanz dosiert wird.
Die weiteren Verfahrensschritte entsprechen den oben beschriebenen Verfahrensschritten. Sobald die Suspension den Durchflussmischer (z.B. Inline-Dispergiermischer) passiert hat, wird sie durch das Vorlagegefäß gepumpt und in den Kreislauf rückgeführt. Die Fällung der Beschichtungssubstanz wird gleichermaßen realisiert durch Dosierung der pH-steuernden Substanzen in den Durchflussmischer. Abschließend wird die Suspension auf einen pH-Wert von etwa 5 bis 7 eingestellt, abgepumpt, und die beschichteten Partikel werden aus der Suspension abgetrennt, gegebenenfalls gewaschen, getrocknet und mit bekannten Methoden feingemahlen.
Eine zusätzlicher Vorteil dieser alternativen Ausführungsform der Erfindung besteht darin, dass auf ein Dispergiermittel verzichtet werden kann.

### Beispiele

Nachfolgend wird die Erfindung anhand von Beispielen näher erläutert, ohne dass diese als Einschränkung der Erfindung zu verstehen sind. Die Mengenangaben beziehen sich jeweils auf den TiO₂-Grundkörper.

### Beispiel 1

Es wurden 224 L einer Suspension von Titandioxid-Grundkörper aus dem Chloridverfahren mit einem Feststoffgehalt von 450 g/L in einem Vorlagegefäß (1) mit Hochleistungsrührwerk (4) bereitgestellt. Die Suspension wurde mit 500 L/h 40 min im Kreislauf (3) durch den Inline-Dispergierer (5) und das Gefäß (1) gepumpt. Während des Kreislaufprozesses wurde die Suspension auf 90°C erhitzt und durch Zugabe von NaOH (7) der pH-Wert auf 10 eingestellt. Anschließend wurde 2,0 Gew.-% SiO₂ in Form von Natriumwasserglaslösung (entsprechend 17,7 L mit einer Wirkstoffkonzentration von 115 g/L) innerhalb von 20 min dosiert (6). Anschließend wurde 20 min weiter umgepumpt, wobei sich die SiO₂-Hülle auf der Partikeloberfläche bildete.

Zur Absenkung des pH-Werts wurde anschließend 0,2 Gew.-% TiO₂ in Form von Titanylchloridlösung (entsprechend 1,5 Liter mit einer Wirkstoffkonzentration von 140 g/l) und anschließend 30 %ige HCl so dosiert (7), dass nach 100 min ein pH-Wert von 7,5 und nach 120 min ein pH-Wert von 4 erreicht war.

Anschließend wurde die Suspension innerhalb von ca. 20 min auf 50°C abgekühlt. Anschließend wurde 3,0 Gew.-% Al₂O₃ in Form von Natriumaluminatlösung (entsprechend 10,4 L mit einer Wirkstoffkonzentration von 293 g/L) (6) bei gleichzeitiger Zugabe von 30 %iger HCl (7) innerhalb von 30 min so dosiert, dass der pH-Wert konstant bei etwa 4 blieb. Abschließend wurde der pH-Wert durch Zugabe von 0,2 Gew.-% Al₂O₃ in Form von Natriumaluminatlösung sowie von NaOH auf einen Wert im Bereich 5 bis 8 eingestellt.

Die Suspension wurde abgepumpt, filtriert, gewaschen, getrocknet und in einer Dampfstrahlmühle gemahlen.

### Vergleichsbeispiel 1a

Wie Beispiel 1, jedoch mit dem Unterschied, dass nicht im Kreislauf gepumpt wurde und dass die wasserlöslichen Vorläuferverbindungen direkt in das Vorlagegefäß (1) gegeben wurden.

### Vergleichsbeispiel 1b

Wie Vergleichsbeispiel 1a, jedoch mit dem Unterschied, dass im Vorlagegefäß (1) anstelle des Leitstrahlmischers ein Propellerrührer installiert war.

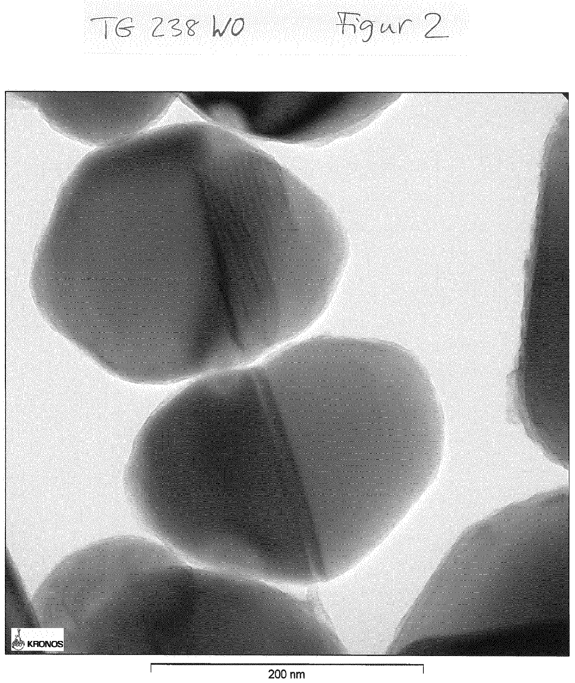

Die erzeugten TiO₂-Pigmente wurden unter dem Transmissionselektronenmikroskop untersucht (Fig. 2) und die spezifische Oberfläche (BET), Schwefelsäurelöslichkeit und Glanz (HMG) wurden getestet (Tab. 1).

**Tabelle 1**

| | BET | Schwefelsäurelöslichkeit | Glanz (HMG) |
|---|---|---|---|
| Beispiel 1 | 9,0 m²/g | 10,0 Gew.-% | 76 |
| Vergleichsbeispiel 1a | 9,5 m²/g | 16,2 Gew.-% | 74 |
| Vergleichsbeispiel 1b | 10,0 m²/g | 16,0 Gew.-% | 72 |

### Beispiel 2

Wie Beispiel 1, jedoch mit dem Unterschied, dass 2,8 Gew.-% SiO₂ anstelle von 2,0 Gew.-% und 2,3 Gew.-% Al₂O₃ anstelle von 3,0 Gew.-% in Form der entsprechenden Vorläuferverbindung dosiert wurden.

### Vergleichsbeispiel 2

Wie Beispiel 2 jedoch mit dem Unterschied, dass nicht im Kreislauf gepumpt wurde und dass die wasserlöslichen Vorläuferverbindungen direkt in das Vorlagegefäß (1) gegeben wurden und dass im Vorlagegefäß (1) anstelle des Leitstrahlmischers ein Propellerrührer installiert war.

Die erzeugten TiO₂-Pigmente wurden unter dem Transmissionselektronenmikroskop untersucht und die spezifische Oberfläche (BET) und Schwefelsäurelöslichkeit wurden getestet (Tab. 2).

**Tabelle 2**

| | BET | Schwefelsäurelöslichkeit |
|---|---|---|
| Beispiel 2 | 9,4 m²/g | 5,9 Gew.-% |
| Vergleichsbeispiel 2 | 11,1 m²/g | 8,2 Gew.-% |

### Beispiel 3

Wie Beispiel 2, jedoch mit dem Unterschied, dass der Prozess bei einer einheitlichen Temperatur von 80°C durchgeführt wurde.

### Vergleichsbeispiel 3

Wie Beispiel 3, jedoch mit dem Unterschied, dass nicht im Kreislauf gepumpt wurde und dass die wasserlöslichen Vorläuferverbindungen direkt in das Vorlagegefäß (1) gegeben wurden und dass im Vorlagegefäß (1) anstelle des Leitstrahlmischers ein Propellerrührer installiert war.

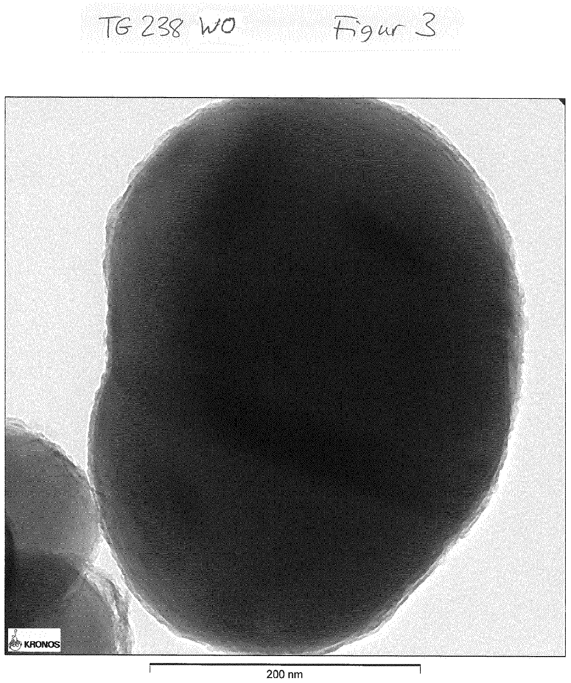

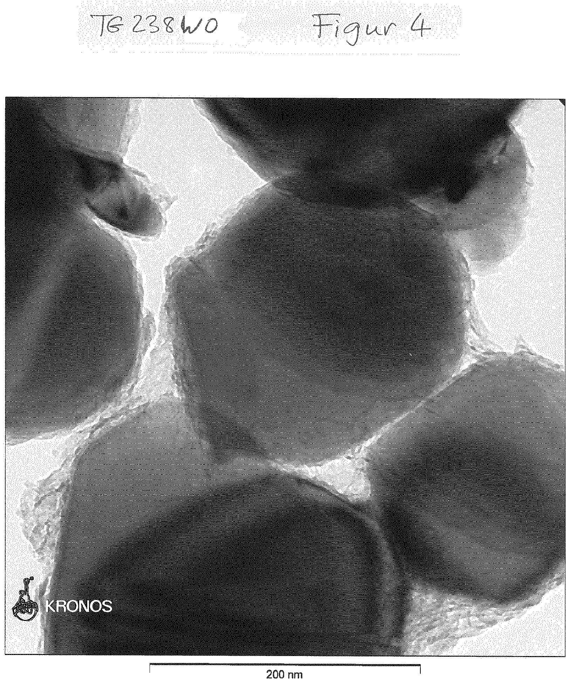

Die erzeugten TiO₂-Pigmente wurden unter dem Transmissionselektronenmikroskop untersucht (Beisp. 3 = Fig. 3, Vergleichsbeisp. 3 = Fig. 4) und die spezifische Oberfläche (BET) und Schwefelsäurelöslichkeit wurden getestet (Tab. 3).

**Tabelle 3**

| | BET | Schwefelsäure löslichkeit |
|---|---|---|
| Beispiel 3 | 12,2 m²/g | 8,2 Gew.-% |
| Vergleichsbeispiel 3 | 15,1 m²/g | 12,6 Gew.-% |

### Testmethoden

Spezifische Oberfläche nach BET (Brunauer-Emmett-Teller):
Die BET-Oberfläche wird mit einem Tristar 3000 der Fa. Micromeritics nach dem statisch volumetrischen Prinzip gemessen.

Schwefelsäurelöslichkeit:
Eine Suspension aus 500 mg Pigment in 25 ml konzentrierter Schwefelsäure (96 Gew.-%) wird 60 min bei 175°C gehalten. Nach Filtration wird im Filtrat das gelöste TiO₂ mittels ICP-Atomemissionsspektrometrie bestimmt. Je geringer die Konzentration des gelösten TiO₂, desto dichter ist die SiO₂-Hülle auf der Pigmentoberfläche.

Glanz (HMG):
Das Pigment wird mit einer Farbenausreibmaschine (Muller) in Alkydal F26 X 60% von Bayer dispergiert. Eine Probe der Suspension mit einer PVK von 27% wird mit einem Filmzieher auf eine Glasplatte aufgezogen. Nach dem Trocknen des Filmaufstrichs wird der Glanz (20°) mit einem Haze-Gloss Reflektometer gemessen.

Mit Hilfe der Transmissionselektronenmikroskopie (TEM) kann die Beschichtung der Titandioxid-Partikel sichtbar gemacht werden.

### Fazit

Das erfindungsgemäße Verfahren führt im Vergleich zu Verfahren des Stands der Technik zu Oberflächenbeschichtungen höherer Glätte (niedrige spezifische Oberfläche nach BET) und verbesserter Dichte (niedrige Schwefelsäurelöslichkeit). Zudem wird weniger Beschichtungssubstanz separat ausgefällt (verbesserter Glanz).

## Patentansprüche

1. Verfahren zur Beschichtung von anorganischen Partikeln in einer wässrigen Suspension mit mindestens einer Beschichtungssubstanz **dadurch gekennzeichnet, dass**
die wässrige Suspension von anorganischen Partikeln im Kreislauf gefördert wird und
wobei in dem Kreislauf ein Gefäß vorhanden ist,
wobei das Gefäß mit einem Hochleistungsrührwerk, das eine Umfangsgeschwindigkeit von mindestens 15 m/s oder eine spezifische Rührleistung von mindestens 30 W/m³ aufweist, ausgerüstet ist und
wobei in dem Kreislauf weiterhin ein auf dem Rotor-Stator-Prinzip beruhender Durchflussmischer installiert ist und
wobei in den Durchflussmischer eine wasserlösliche Vorläuferverbindung der mindestens eine Beschichtungssubstanz dosiert wird.

2. Verfahren nach Anspruch 1 **dadurch gekennzeichnet, dass**
die anorganischen Partikel Titandioxidpartikel sind.

3. Verfahren nach Anspruch 1 oder 2 **dadurch gekennzeichnet, dass**
die Partikel mit Siliciumdioxid und/öder Aluminiumoxid beschichtet werden.

4. Verfahren nach einem oder mehreren der Ansprüche 1 bis 3 **dadurch gekennzeichnet, dass**
das Gefäß entweder geheizt oder gekühlt werden kann.

5. Verfahren nach einem oder mehreren der Ansprüche 1 bis 4 **dadurch gekennzeichnet, dass**
die Beschichtung mit Siliciumdioxid bei einer Temperatur von 85 bis 95°C stattfindet.

6. Verfahren nach einem oder mehreren der Ansprüche 1 bis 4 **dadurch gekennzeichnet, dass**
die Beschichtung mit Aluminiumoxid bei einer Temperatur von 45 bis 55°C stattfindet.

7. Verfahren nach Anspruch 3 **dadurch gekennzeichnet, dass**
die Siliciumdioxid-Beschichtung als dichte Hülle ausgebildet ist.

8. Verfahren nach einem oder mehreren der Ansprüche 1 bis 7 **dadurch gekennzeichnet, dass**
gegebenenfalls erforderliche pH-steuernde Substanzen über den Durchflussmischer in die Suspension dosiert werden.

9. Verfahren nach Anspruch 8 **dadurch gekennzeichnet, dass**
als pH-steuernde Substanz Titanylchlorid eingesetzt wird.

10. Verfahren nach einem oder mehreren der Ansprüche 1 bis 9 **dadurch gekennzeichnet, dass**
die beschichteten anorganischen Partikel am Ende des Verfahrens einen pH-Wert von weniger als 6,5 aufweisen.

11. Verfahren nach einem oder mehreren der Ansprüche 1 bis 10 **dadurch gekennzeichnet, dass**
die Suspension über das Gefäß in den Kreislauf eingeleitet wird.

12. Verfahren nach einem oder mehreren der Ansprüche 1 bis 10 **dadurch gekennzeichnet, dass**
die Suspension vor dem Durchflussmischer in den Kreislauf eingeleitet wird.

13. Verfahren nach Anspruch 12 **dadurch gekennzeichnet, dass**
die anorganischen Partikel vor Einleitung in den Kreislauf deagglomeriert werden, indem die Suspension durch eine Mühle gefördert wird..

14. Verfahren nach Anspruch 13 **dadurch gekennzeichnet, dass**
der Suspension kein Dispergiermittel zugesetzt wird.

## Claims

1. Method for coating inorganic particles in an aqueous suspension with at least one coating substance, **characterised in that**
the aqueous suspension of inorganic particles is recirculated, and
where the circuit contains a vessel,
where the vessel is equipped with a high-speed agitator displaying a peripheral speed of at least 15 m/s or a specific agitator capacity of at least 30 W/m³, and where a pipeline mixer based on the rotor/stator principle is furthermore installed in the circuit, and
where a water-soluble precursor compound of the at least one coating substance is metered into the pipeline mixer.

2. Method according to Claim 1, **characterised in that**
the inorganic particles are titanium dioxide particles.

3. Method according to Claim 1 or 2, **characterised in that**
the particles are coated with silicon dioxide and/or aluminium oxide.

4. Method according to one or more of Claims 1 to 3, **characterised in that**
the vessel can be either heated or cooled.

5. Method according to one or more of Claims 1 to 4, **characterised in that**
coating with silicon dioxide takes place at a temperature of 85 to 95 °C.

6. Method according to one or more of Claims 1 to 4, **characterised in that**
coating with aluminium oxide takes place at a temperature of 45 to 55 °C.

7. Method according to Claim 3, **characterised in that**
the silicon dioxide coating is formed as a dense skin.

8. Method according to one or more of Claims 1 to 7, **characterised in that**
any necessary pH-controlling substances are metered into the suspension via the pipeline mixer.

9. Method according to Claim 8, **characterised in that**
titanyl chloride is used as the pH-controlling substance.

10. Method according to one or more of Claims 1 to 9, **characterised in that**
the coated, inorganic particles display a pH value of less than 6.5 at the end of the process.

11. Method according to one or more of Claims 1 to 10, **characterised in that**
the suspension is added to the circuit at the vessel.

12. Method according to one or more of Claims 1 to 10, **characterised in that**
the suspension is added a to the circuit at the pipeline mixer.

13. Method according to Claim 12, **characterised in that**
the inorganic particles are disagglomerated by passing the suspension through a mill prior to its addition to the circuit.

14. Method according to Claim 13, **characterised in that**
no dispersant is added to the suspension.

## Revendications

1. Procédé de revêtement de particules inorganiques dans une suspension aqueuse avec au moins une substance de revêtement, **caractérisé en ce que**
la suspension aqueuse de particules inorganiques est transportée en circuit et
dans lequel un récipient est présent dans le circuit,
dans lequel le récipient est équipé d'un agitateur puissant qui présente une vitesse périphérique d'au moins 15 m/s ou une puissance d'agitation spécifique d'au moins 30 W/m³ et
dans lequel un mélangeur reposant sur le principe rotor-stator est en outre installé dans le circuit et
dans lequel un composé précurseur hydrosoluble de l'au moins une substance de revêtement est dosé dans le mélangeur.

2. Procédé selon la revendication 1, **caractérisé en ce que**
les particules inorganiques sont des particules de dioxyde de titane.

3. Procédé selon la revendication 1 ou 2, **caractérisé en ce que**
les particules sont revêtues de dioxyde de silicium et/ou d'oxyde d'aluminium.

4. Procédé selon l'une quelconque des revendications 1 à 3, **caractérisé en ce que**
le récipient peut être soit chauffé soit refroidi.

5. Procédé selon l'une quelconque des revendications 1 à 4, **caractérisé en ce que**
le revêtement avec du dioxyde de silicium a lieu à une température comprise entre 85 et 95 °C.

6. Procédé selon l'une quelconque des revendications 1 à 3, **caractérisé en ce que**
le revêtement avec de l'oxyde d'aluminium a lieu à une température comprise entre 45 et 55 °C.

7. Procédé selon la revendication 3, **caractérisé en ce que**
le revêtement de dioxyde de silicium est réalisé comme une enveloppe étanche.

8. Procédé selon l'une quelconque des revendications 1 à 7, **caractérisé en ce que**
des substances contrôlant le pH éventuellement nécessaires sont dosées dans la suspension par l'intermédiaire du mélangeur.

9. Procédé selon la revendication 8, **caractérisé en ce que**
du chlorure de titanyle est utilisé comme substance contrôlant le pH.

10. Procédé selon l'une quelconque des revendications 1 à 9, **caractérisé en ce que**
les particules inorganiques revêtues ont, à la fin du procédé, une valeur pH inférieur à 6,5.

11. Procédé selon l'une quelconque des revendications 1 à 10, **caractérisé en ce que**
la suspension est introduite dans le circuit par l'intermédiaire du récipient.

12. Procédé selon l'une quelconque des revendications 1 à 10, **caractérisé en ce que**
la suspension est introduite dans le circuit avant le mélangeur.

13. Procédé selon la revendication 12, **caractérisé en ce que**
les particules inorganiques sont désagglomérées avant introduction dans le circuit du fait que la suspension est transportée à travers un moulin.

14. Procédé selon la revendication 13, **caractérisé en ce**
**qu'**aucun agent de dispersion n'est ajouté à la suspension.
